# EUROPÄISCHE PATENTSCHRIFT

(11) **EP 3 689 653 B1**
(45) Veröffentlichungstag und Bekanntmachung des Hinweises auf die Patenterteilung: **26.01.2022**
(21) Anmeldenummer: 20154220.6
(22) Anmeldetag: 29.01.2020
(51) Int. Cl.: B60H 1/32, F25B 39/02, F28D 9/00

(54) **REAKTOR ZUR AUFNAHME EINES SPEICHERMATERIALS UND VERFAHREN ZUR HERSTELLUNG DESSELBEN**
REACTOR FOR RECEIVING A STORAGE MATERIAL AND METHOD OF MANUFACTURING THE SAME
RÉACTEUR DESTINÉ À RECEVOIR UNE MATIÈRE D'ACCUMULATION ET SON PROCÉDÉ DE FABRICATION

(30) Priorität: 30.01.2019 DE 102019102271
(43) Veröffentlichungstag der Anmeldung: 05.08.2020
(73) Patentinhaber: Deutsches Zentrum für Luft- und Raumfahrt e.V., 51147 Köln (DE)
(72) Erfinder: WECKERLE, Christoph, 73326 Deggingen (DE); BÜRGER, Inga, 70563 Stuttgart (DE); LINDER, Marc Philipp, 70199 Stuttgart (DE); HEGNER, Robert, 70771 Leinfelden-Echterdingen (DE); DITTUS, Holger, 75397 Simmozheim (DE)
(74) Vertreter: Fleck, Julia Maria

(56) Entgegenhaltungen:
- DE-A1-102013 215 241
- DE-B3-102016 110 062
- FR-A1- 2 666 875

## Beschreibung

Die Erfindung betrifft einen Reaktor zur Aufnahme eines Speichermaterials, welches unter Absorption bzw. Desorption eines Reaktionsgases Wärme abgibt bzw. aufnimmt, umfassend einen Plattenwärmeübertrager mit einer Höhe H, der eine Anzahl von, insbesondere zueinander im Wesentlichen parallelen, Platten mit einer Länge L und einer Breite B aufweist, zwischen denen Spaltkanäle mit Spalthöhen ausgebildet sind, wobei die Spaltkanäle unterteilt sind in eine Gruppe primärer Spaltkanäle, die strömungsmechanisch parallel geschaltet sind und zusammen einen primären Strömungskanal bilden, der mit zumindest einem primären Zu-/Ablaufkanal einer Zu-/Ablaufanordnung zur Leitung von Reaktionsgas in Strömungsverbindung steht, und eine Gruppe sekundärer Spaltkanäle, die strömungsmechanisch parallel geschaltet sind und zusammen einen sekundären Strömungskanal bilden, der mit zumindest einem sekundären Zu-/Ablaufkanal einer sekundären Zu-/Ablaufanordnung zur Leitung von Wärmetauscherfluid in Strömungsverbindung steht, wobei die primären Spaltkanäle und die sekundären Spaltkanäle zueinander abwechselnd angeordnet sind.

Die DE 10 2013 215 241 A1) zeigt einen Wärmeübertrager mit mehreren zwischen Platten gebildeten Räumen zur Aufnahme eines Arbeitsmediums, die zur Ausbildung mindestens eines Strömungskanals für einen zu erwärmenden oder zu kühlenden Medienstrom beabstandet zueinander angeordnet sind. Das Arbeitsmedium kann zugleich ein Speichermaterial bilden, welches als Phasenwechselmaterial vorliegt.

Im Rahmen der Elektromobilität stellt die Fahrzeuginnenraumklimatisierung eine erhebliche Herausforderung dar. Zum einen wird durch den Einsatz konventionell elektrisch betriebener Klimaanlagen die Reichweite des Fahrzeugs um etwa 35 % bis 50 % reduziert. Zum anderen erfordern derartige Klimaanlagen den Einsatz unterschiedlicher und teilweise giftiger Kältemittel. Daher besteht Bedarf an alternativen Klimatisierungstechnologien, die gegebenenfalls auch in konventionellen Verbrennungsmotoren einsetzbar sind.

Einen vielversprechenden Ansatz stellt die Verwendung thermochemischer Gas-Feststoff-Reaktionssysteme (kurz "Reaktionssysteme") dar, wobei ein Reaktionsgas in einer exothermen Reaktion reversibel an einen Feststoff als Speichermaterial gebunden wird (Absorption). Der Klimatisierungseffekt basiert auf der endothermen Rückreaktion unter Freisetzung des Reaktionsgases (Desorption) und Wärmeaufnahme aus der Umgebung. Als Materialpaarungen des Reaktionssystems kommen beispielsweise Wasserstoff als Reaktionsgas und ein Metall als Feststoff infrage, wobei in beladenem Zustand ein Metallhydrid entsteht. Der Antrieb dieser Systeme erfolgt bei den sogenannten geschlossenen Systemen durch eine Wärmequelle und bei den sogenannten offenen Systemen durch eine Druckdifferenz in der Reaktionsgas-Versorgung.

Kernkomponenten der Systeme stellen die eingesetzten Reaktoren dar, die einerseits das Speichermaterial, insbesondere das Metallhydrid, beinhalten und andererseits den Wärmetransport von bzw. auf ein Wärmeträgerfluid ermöglichen.

Ein leistungsfähiges und sicheres Reaktordesign der oben genannten Art ist in der DE 10 2016 110 062 B3 angegeben.

Ein weiterer Reaktor ist in der US 2010/0 024 448 A1 angegeben, wobei ein Wärmetauscher in Ausbildung als Feststoff-Gas-Reaktor gezeigt ist. Der Wärmetauscher weist Schlitze zur Aufnahme von Adsorptionsmaterial, vorzugsweise Aktivkohle, sowie Kanäle mit einer geringeren Höhe zur Leitung von Wärmetauscherfluid auf. Die Kanäle sind in einer Platte eingearbeitet und werden in Paarung mit einer flachen Platte verschlossen.

Der vorliegenden Erfindung liegt die Aufgabe zugrunde, einen Reaktor bereitzustellen, der gegenüber dem aus dem Stand der Technik bekannten Reaktordesign weiter optimiert ist, sowie ein Verfahren zu dessen Herstellung.

Die Aufgabe wird für den Reaktor mit den Merkmalen des Anspruchs 1 und für das Verfahren mit den Merkmalen des Anspruchs 9 gelöst. Bei dem Reaktor ist vorgesehen, dass zumindest einer der primären Spaltkanäle eine größere Spalthöhe (d. h. Abstand der jeweiligen Platten(-Innenseiten) in Höhen-(y-)Richtung) aufweist als zumindest einer der sekundären Spaltkanäle.

Auf diese Weise wird innerhalb des Plattenwärmeübertragers für das Speichermaterial ein größeres Volumen bereitgestellt als von Wärmeträgerfluid durchströmbares bzw. durchströmtes Volumen, so dass sich ein insgesamt asymmetrisches Verhältnis von mit Speichermaterial gefülltem Volumen zu mit Fluid durchströmbarem bzw. durchströmtem Volumen ergibt. Untersuchungen der Erfinder haben gezeigt, dass dadurch die Leistungsdichte des Reaktors gegenüber der aus der DE 10 2016 110 062 B3 bekannten Reaktorausbildung weiter erhöht werden kann. Vorzugsweise weisen dabei alle primären Spaltkanäle jeweils die gleiche Spalthöhe und alle sekundären Spaltkanäle jeweils die gleiche Spalthöhe auf.

Die Wärmeleitfähigkeit innerhalb des Speichermaterials wird dadurch gegenüber einer Pulverform von z. B. 1 W/ (m * K) auf z. B. zwischen 3 und 8 W/ (m * K) verbessert, dass das Speichermaterial innerhalb eines jeweiligen primären Spaltkanals in Form zumindest eines Presskörpers (in Art eines Pellets bzw. Briketts) vorliegt. Dadurch lassen sich bei gleichen Wärmetransporteigenschaften deutlich höhere Schichtdicken realisieren, was der Leistungsdichte des Reaktors zuträglich ist. Darüber hinaus wird der Befüllprozess des Plattenwärmeübertragers mit dem Speichermaterial deutlich vereinfacht, da der Einfluss von Kontakt mit Sauerstoff (Oxidation) auf die Betriebsfähigkeit minimiert und so eine Handhabung der Presskörper unter Sauerstoffatmosphäre ermöglicht wird. Die Herstellungsprozess der Presskörper kann in drei Teilschritte gegliedert sein: Zunächst wird pulverförmiges Speichermaterial, insbesondere ein Metallhydrid, z. B. mittels Kugelmühlen zerkleinert bzw. homogenisiert. Anschließend wird es, zwecks Erhöhung der Wärmeleitfähigkeit in dem Presskörper, mit beispielsweise 5 bis 20 Massen%, z. B. 8 bis 12 Massen% an Graphit, insbesondere expandierendem Naturgraphit, gemischt und anschließend zu den Presskörpern der gewünschten Form kompaktiert bzw. gepresst. Die Presskörper weisen eine Porosität, d.h. einen Hohlraumanteil, von beispielsweise zwischen 30 % und 70 %, vorzugsweise 40 % und 60 %, beispielsweise 50 % auf. Bei einer derartigen Porosität kann sowohl ein vorteilhafter Stoff- als auch Wärmetransport gewährleistet werden sowie eine reaktionsbedingte Volumenänderung des Speichermaterials im Betrieb kompensiert werden.

In einer bevorzugten Ausbildungsvariante beträgt das Verhältnis der Spalthöhen der sekundären Spaltkanäle zu den Spalthöhen der primären Spaltkanäle zwischen 1:2 und 1:10, vorzugsweise zwischen 1:3 und 1:8, besonders bevorzugt zwischen 1:4 und 1:6, beträgt. Bei den sekundären Spaltkanälen zur Leitung des Wärmeträgerfluids hat sich eine Spalthöhe zwischen 1 mm und 2 mm, beispielsweise 1,5 mm, als vorteilhaft für den Betrieb erwiesen. Die Spalthöhe der primären Spaltkanäle kann beispielsweise zwischen 3 mm und 10 mm, beispielsweise zwischen 7 mm und 9 mm, insbesondere 8 mm betragen, wobei die Spalthöhe auch von der Wärmeleitfähigkeit des in den primären Spaltkanälen befindlichen Speichermaterials abhängt. Bei Vorliegen des Speichermaterials in Form eines Presskörpers mit einer Wärmeleitfähigkeit von beispielsweise 4 W/(m*K) hat sich in einem Wasserstoff-Metallhydrid-Reaktionssystem z. B. eine Spalthöhe von etwa zwischen 6 und 10 mm, z. B. 8 mm, als vorteilhaft erwiesen.

Ein guter Wärmeübergang zwischen den Presskörpern und den Platten bzw. dem Wärmeträgerfluid ist erreichbar, wenn die Außenmaße des Presskörpers (in den jeweiligen Spaltkanälen) im Wesentlichen den Raummaßen des jeweiligen primären Spaltkanals entsprechen. Dabei ist der Presskörper vorzugsweise jeweils in Kontakt mit (im Wesentlichen) den gesamten, in Richtung des primären Spaltkanals weisenden, Plattenseiten bzw. Platteninnenwänden angeordnet. Vorzugsweise ist, für einen guten Wärmeübergang, jeweils lediglich ein Presskörper innerhalb eines primären Spaltkanals angeordnet. Vorzugsweise weisen der Presskörper und die jeweils den Presskörper kontaktierende/n Plattenseite/n die gleiche Oberflächenform bzw.-struktur auf, so dass ein flächiger Kontakt zwischen dem Presskörper und der Plattenseite erhalten wird. Auf der in Richtung sekundären Spaltkanal weisenden Seite kann die Platte jeweils Turbulenz erzeugende Strukturen, z. B. eine Profilierung, aufweisen, um den Wärmeübergang zwischen den Platten und dem Wärmeträgerfluid zu verbessern.

In einer bevorzugten Ausbildungsvariante ist innerhalb des Presskörpers zumindest ein Gaskanal zur Leitung des Reaktionsgases durch den Presskörper vorhanden, der zumindest mit einem der primären Zu-/Ablaufkanäle in Strömungsverbindung steht. Auf diese Weise kann ausgehend von dem Zu-/Ablaufkanal das Reaktionsgas durch den Presskörper geleitet werden, was den Stofftransport an jeder Stelle des Speichermaterials signifikant verbessert. Vorzugsweise steht der Gaskanal / stehen die Gaskanäle mit mehreren, z B. allen, primären Zu-/Ablaufkanälen in Strömungsverbindung. So kann dem Presskörper an unterschiedlichen Stellen Reaktionsgas zugegeben und einer Stofftransportlimitierung im Betrieb entgegengewirkt werden.

Zur Verbesserung des Stofftransports unter Vermeidung einer Stofftransportlimitierung im Reaktorbetrieb hat es sich als vorteilhaft herausgestellt, wenn der Gaskanal bzw. die Gaskanäle in dem Presskörper derart angeordnet sind, dass der Abstand aller infinitesimalen Presskörpervolumina des jeweiligen Presskörpers (d. h. aller "Orte" bzw. "Stellen" innerhalb des Presskörpers) maximal 40 mm, vorzugsweise maximal 20 mm oder 10 mm, von dem Gaskanal bzw. den Gaskanälen beträgt ("maximaler Abstand"). Der Abstand bezieht sich auf die Grenzfläche zwischen Gaskanal und Presskörper und der jeweiligen Stelle innerhalb des Presskörpers. Der Gaskanal kann beispielsweise als ein einziger Gaskanal ausgebildet sein, der z. B. zwei vorhandene Zu-/Ablaufkanäle für das Reaktionsgas innerhalb des Plattenwärmeübertragers bzw. eines Presskörpers verbindet, z. B. mäandrierend durch den Presskörper verlaufend. Denkbar wären auch jeweils von den primären Zu-/Ablaufkanälen ausgehende, gerade Gaskanäle in Breitenrichtung (z-Richtung), die durch orthogonal dazu verlaufende, parallele Längskanäle miteinander verbunden sind, oder weitere Kanalanordnungen. Für eine einfache Fertigung können die Kanäle insbesondere einen runden Querschnitt aufweisen. Die Kanäle können z. B. nach Fertigung des Presskörpers durch Bohren oder bereits bei der Fertigung durch entsprechende Formgebung in den Presskörper eingebracht werden. Der maximale Abstand hängt von Stoff- bzw. Betriebsgrößen (Beschaffenheit des Reaktionsgases, Betriebsdruckbereich, Porosität des Presskörpers etc.), insbesondere von der Permeabilität des Presskörpers gegenüber dem Reaktionsgas, ab und kann beispielsweise durch Auslegungsuntersuchungen ermittelt werden. In der Praxis, bei Druck- und Temperaturrandbedingungen für den Einsatz bei einer Klimaanlagenanordnung, mit Wasserstoff und einem Metallhydrid als Reaktionssystem, hat sich ein maximaler Abstand von beispielsweise weniger als 40 mm, vorzugsweise weniger als 20 mm oder 10 mm, als vorteilhaft erwiesen.

Ebenfalls der Vermeidung einer Stofftransportlimitierung ist es zweckdienlich, wenn bei einer Länge des primären Spaltkanals von mehr als 100 mm, vorzugsweise mehr als 75 mm, zumindest zwei primäre Zu-/Ablaufkanäle vorhanden sind, wobei der Abstand zwischen zwei primären Zu-/Ablaufkanälen maximal 200 mm, vorzugsweise maximal 150 mm, z. B. maximal 100 mm oder 75 mm beträgt. Der Abstand bezieht sich auf den jeweils geringsten Abstand zwischen zwei primären Zu-/Ablaufanschlüssen.

Zur Verhinderung von Verunreinigungen innerhalb der primären Spaltkanäle ist es zweckdienlich, wenn in zumindest einem der primären Zu-/Ablaufkanäle eine Filterkerze angeordnet ist, die insbesondere derart dimensioniert ist, dass sie formschlüssig in dem primären Zu-/Ablaufkanal sitzt und welche bevorzugt aus einem Sintermetall gefertigt ist.

Eine besonders zweckmäßige Ausbildung des Reaktors ergibt sich, wenn die primären und die sekundären Zu-/Ablaufkanäle zylindrisch ausgebildet sind und in Höhenrichtung, orthogonal zu den Platten durch die Platten und die Spaltkanäle verlaufen. Dabei sind die Zu-/Ablaufkanäle jeweils zu den mit ihnen in Strömungsverbindung stehenden Spaltkanälen hin geöffnet und zu den anderen Spaltkanälen hin fluiddicht verschlossen. Durch diese Ausbildung kann ein besonders einfach zu fertigender und bauraumoptimierter Plattenwärmeübertrager bzw. Reaktor bereitgestellt werden.

Die Aufgabe wird für das Verfahren zur Herstellung des Reaktors mit den Merkmalen des Anspruchs 9 gelöst. Einige vorteilhafte Ausführungsvarianten sind im Zusammenhang mit den vorstehenden Ausbildungsvarianten des Reaktors sinngemäß beschrieben.

Als vorteilhaft für eine effiziente Herstellung des Reaktors hat es sich erwiesen, wenn mehrere Einheiten, umfassend jeweils einen Presskörper und zumindest eine Platte, vormontiert werden und wenn die Einheiten anschließend mittels eines Löt- und/oder Schweißprozesses zu dem Reaktor fluiddicht gefügt werden. Die Dichtheit muss auch bei hohen Betriebsdrücken, beispielsweise zwischen 10 bar und 50 bar, gewährleistet sein.

Alternativ (oder zusätzlich) können die Platten unter Bildung von Spaltkanälen aneinandergefügt werden, wobei die Spaltkanäle zunächst an einer Seite (z. B. einer über die Breite des Plattenwärmeübertragers verlaufenden Stirnseite) offenbleiben. Anschließend kann an der offenen Seite das Speichermaterial in Form von Presskörpern eingebracht, insbesondere einfach eingeschoben, werden und anschließend die offene Seite insbesondere mit z. B. einer Wandung fluiddicht verschlossen, z. B. verschraubt, werden.

Zur Herstellung der (vollständigen) Betriebsbereitschaft des Reaktors wird nach der Montage des Reaktors unter Befüllung mit dem Speichermaterial ein Aktivierungsschritt durchgeführt, bei dem zumindest ein, vorzugsweise fünf bis zehn, Absorptions-/ Desorptionszyklen durchlaufen wird. Dabei wird jeweils das Reaktionsgas in das Speichermaterial absorbiert und von dem Speichermaterial desorbiert. Auf diese Weise kann eine Oxidschicht auf den jeweiligen Presskörpern entfernt werden, die sich bei Handhabung der Presskörper unter sauerstoffhaltiger Atmosphäre bildet.

Anschließend wird die Erfindung anhand von Ausführungsbeispielen unter Bezugnahme auf die Zeichnungen näher erläutert. Es zeigen:
- Fig. 1: eine schematische Darstellung eines Reaktors mit einem Plattenwärmeüberträger umfassend primäre und sekundäre Spaltkanäle, die unterschiedliche Spalthöhen aufweisen, in Schnittdarstellung in seitlicher Ansicht,
- Fig. 2: eine Platte einer weiteren Ausgestaltungsvariante, mit nach innen versetzten, zylindrischen Zu-/Ablaufkanälen, eines Reaktors in Ansicht von oben und
- Fig. 3: Speichermaterial in Form eines Presskörpers mit einem Gaskanal in Schnittdarstellung entlang einer y-z-Ebene.

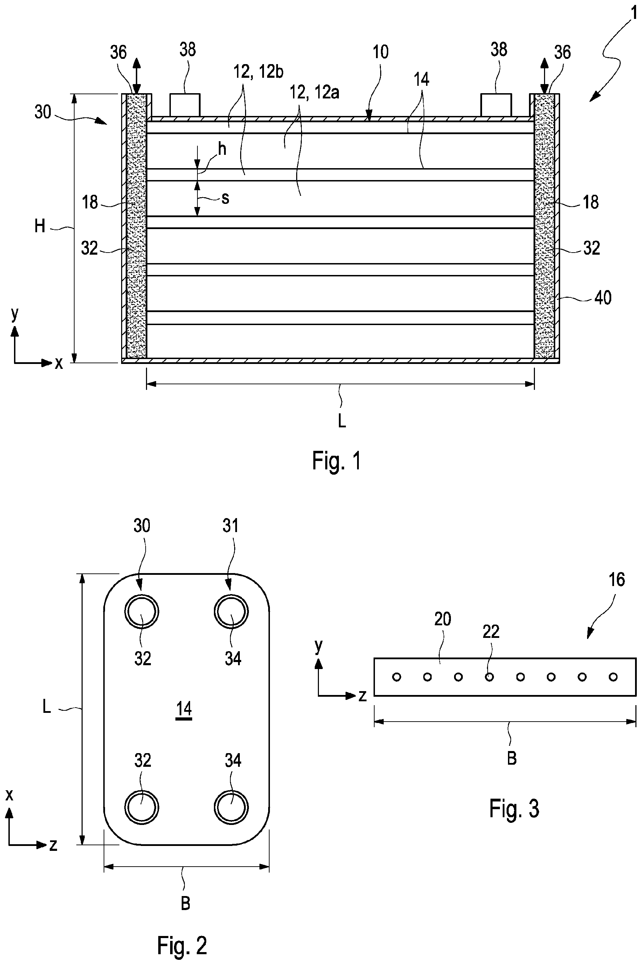

Fig. 1 zeigt schematisch einen Reaktor 1 in seitlicher Schnittdarstellung durch zwei primäre Zu-/Ablaufkanäle 32. Der Reaktor 1 dient zur Aufnahme eines Speichermaterials 16 (vgl. Fig. 3), das unter Absorption bzw. Desorption eines Reaktionsgases Wärme abgibt bzw. aufnimmt. Bei dem Speichermaterial 16 und dem Reaktionsgas handelt es sich um komplementäre Bestandteile eines thermochemischen Reaktionssystems. Der Reaktor 1 ist optimiert auf die Bereitstellung einer hohen Leistungsdichte und kann somit beispielsweise als Kernkomponente einer Klimaanlage basierend auf einem thermochemischen Reaktionssystem zum Einsatz kommen. Für diesen Einsatzzweck eignen sich aufgrund kurzer Reaktionszeiten und hoher Leistungsdichten insbesondere Metallhydride als Speichermaterial 16, z. B. eine Titan-Mangan-Legierung. Ein für die Verwendung in einer Klimaanlage geeignetes Reaktionssystem ergibt sich bei einer Verwendung von Wasserstoff als Reaktionsgas.

Hierbei ergeben sich geeignete Reaktionstemperaturen in einem geeigneten Druckfenster von z. B. zwischen 5 bar und 50 bar.

Der Reaktor 1 umfasst einen Plattenwärmeübertrager 10 mit einem druckdichten, z. B. etwa quaderförmigen Gehäuse 40, der sich in y-Richtung über eine Höhe H von z. B. zwischen 10 cm und 20 cm erstreckt. Der Plattenwärmeübertrager 10 weist mehrere Platten 14 auf, die orthogonal zur y-Richtung (zumindest im Wesentlichen) parallel zueinander in x-z-Ebenen übereinander angeordnet sind. Die Platten 14 weisen (technisch) die gleichen Maße auf und sind vorliegend beispielhaft im Wesentlichen rechteckig ausgebildet, mit einer Länge L (in x-Richtung) und einer Breite B (in z-Richtung), mit B ≤ L (vgl. auch Fig. 2). Die Länge kann beispielsweise etwa 33 cm und die Breite etwa 9 cm betragen. Die Anzahl der Platten 14 bzw. der Höhe H richtet sich unter anderem nach der geforderten Leistung des Reaktors 1 im spezifischen Anwendungsfall.

Zwischen den Platten 14 sind Spaltkanäle 12 gebildet bzw. definiert, die durch die Platten 14 nach oben und unten (in y-Richtung) begrenzt sind. Die Spaltkanäle 12 sind unterteilt in eine Gruppe primärer Spaltkanäle 12a und eine Gruppe sekundärer Spaltkanäle 12b, die jeweils strömungsmechanisch zueinander parallel geschaltet sind und zusammen einen primären bzw. sekundären Strömungskanal bilden. Die primären und sekundären Spaltkanäle 12a, 12a sind zueinander abwechselnd angeordnet.

Die primären Spaltkanäle 12a sind mit Speichermaterial 16 (vgl. Fig. 3) gefüllt, in welches das Reaktionsgas absorbiert bzw. von welchem es desorbiert. Die primären Spaltkanäle 12a stehen mit beispielsweise zwei primären Zu-/Ablaufkanälen 32 einer primären Zu-/Ablaufanordnung 30 in Strömungsverbindung, durch welche das Reaktionsgas (während der Absorption) von einer Versorgungsperipherie in das Speichermaterial 16 bzw. (während der Desorption) von dem Speichermaterial 16 in die Versorgungsperipherie geleitet wird. Bei dem in Fig 1 gezeigten Beispiel sind die primären Zu-/Ablaufkanäle 32 jeweils an den beiden Stirnseiten des Plattenwärmeübertragers 10 innerhalb des Gehäuses 40 angeordnet. Weiterhin möglich ist eine nach innen, in den Bereich der Platten 14 hineinversetzte Anordnung, wie z. B. in Fig. 2 gezeigt. Das Reaktionsgas wird den primären Zu-/Ablaufkanälen 32 über primäre Zu-/Ablaufanschlüsse 36 der primären Zu-/Ablaufanordnung 30 zu- bzw. von diesen abgeführt.

Die sekundären Spaltkanäle 12b sind zur Leitung eines Wärmeträgerfluids ausgebildet. Dazu stehen die sekundären Spaltkanäle 12b in Strömungsverbindung mit Zu-/Ablaufkanälen 32 einer sekundären Zu-/Ablaufanordnung 31 zur Zu- und/oder Ableitung des Wärmeträgerfluids aus den sekundären Spaltkanälen 12b. Die Zu-/Ablaufanordnung 32 ist z. B. Bestandteil eines (hier nicht gezeigten) Wärmeträgerfluid-Kreislaufs einer Klimatisierungsanordnung, beispielsweise eines Fahrzeuges. Zur Kopplung der sekundären Zu-/Ablaufkanäle 34 an einen Wärmeträgerfluidkreislauf dienen sekundäre Zu-/Ablaufanschlüsse 38 der sekundären Zu-/Ablaufanordnung 31.

Die Platten 14 können insbesondere auf der den sekundären Spaltkanälen 12b zugewandten Seite eine Turbulenz fördernde Oberflächenstruktur, beispielsweise eine Profilierung, aufweisen (hier nicht gezeigt). Auf diese Weise kann der Wärmeübergang zwischen den Platten 14 und dem Wärmeträgerfluid verbessert werden.

Die primären Spaltkanäle 12a weisen jeweils Spalthöhen s (Abstand der Platten 14 in y-Richtung) auf. Die sekundären Spaltkanäle 12b weisen jeweils Spalthöhen h auf. Gemäß einem Kerngedanken der Erfindung sind die Spalthöhen s und h bei dem erfindungsgemäßen Reaktor 1 unterschiedlich groß. Genauer weisen die primären Spaltkanäle 12a eine größere Spalthöhe s auf als die sekundären Spaltkanäle 12b. Auf diese Weise wird für das Speichermaterial 16 ein größeres (Speicher-) Volumen bereitgestellt als von Wärmeträgerfluid durchströmtes Volumen, so dass sich ein insgesamt asymmetrisches Verhältnis von mit Speichermaterial 16 gefülltem Volumen zu mit Fluid durchströmbaren bzw. durchströmten Volumen ergibt. Untersuchungen der Erfinder haben gezeigt, dass dadurch die Leistungsdichte des Reaktors 1 gegenüber aus dem Stand der Technik bekannten Reaktorausbildungen weiter erhöht werden kann. Abhängig von der realisierbaren Wärmeleitfähigkeit innerhalb des Speichermaterials 16 hat sich dabei z. B. ein Verhältnis der Spalthöhen h der sekundären Spaltkanäle 12b zu den Spalthöhen s der primären Spaltkanäle 12a zwischen 1 : 3 und 1 : 8, vorzugsweise zwischen 1 : 4 und 1 : 6, beispielsweise von rund 1 : 4 oder 1 : 5 herausgestellt. Als geeignet hat sich beispielsweise die Spalthöhe h der sekundären Spaltkanäle 12b von 1,5 mm herausgestellt, während die Spalthöhe s der primären Spaltkanäle 12a rund 8 mm beträgt (bei einer Wärmeleitfähigkeit des Speichermaterials von z. B. 4 W/ (m * K)).

Für eine gesteigerte Wärmeleitfähigkeit innerhalb des Speichermaterials 16 und eine vereinfachte Herstellbarkeit des Reaktors 1 ist das Speichermaterial 16 jeweils in Form eines Presskörpers 20, etwa in Art eines Pellets bzw. Briketts, in die primären Spaltkanäle 12a eingebracht. Der Herstellungsprozess der Presskörper 20 kann in drei Teilschritte gegliedert sein: Zunächst wird pulverförmiges Speichermaterial 16, insbesondere ein Metallhydrid, z. B. mittels Kugelmühlen zerkleinert bzw. homogenisiert. Anschließend wird es mit Graphit, insbesondere expandierendem Naturgraphit, gemischt und anschließend zu den Presskörpern 20 der gewünschten Form kompaktiert. Die Presskörper 20 weisen eine Porosität, d.h. einen Hohlraumanteil, von beispielsweise zwischen 30 % und 70 %, vorzugsweise 40 % und 60 %, beispielsweise 50 % auf. Auf diese Weise kann zum einen eine reaktionsbedingte Volumenänderung des Speichermaterials kompensiert werden. Des Weiteren wird so der Stofftransport innerhalb des Presskörpers 20 gewährleistet, bei gleichzeitig hoher (Wärme-) Leitfähigkeit innerhalb des Presskörpers 20 von z. B. zwischen 3 und 8 W/ (m * K)). Dieser Wert liegt deutlich höher als bei pulverförmigen Speichermaterialien 16, wodurch sich bei gleichen Wärmetransporteigenschaften deutlich höhere Schichtdicken realisieren lassen, was der Leistungsdichte zuträglich ist. Darüber hinaus ergeben sich Vorteile bei der Reaktorfertigung, da der Einfluss von Kontakt mit Sauerstoff (Oxidation) auf die Betriebsfähigkeit minimiert und der Befüllungsprozess vereinfacht wird.

Die Außenmaße des Presskörpers 20 entsprechen im Wesentlichen den (inneren) Raummaßen der jeweiligen primären Spaltkanäle 12a. So ergibt sich im vorliegenden Fall eine im Wesentlichen quaderförmige Ausgestaltung der in die Spaltkanäle 12a eingebrachten Presskörper 20, z. B. mit einer Dicke bzw. Höhe (in y-Richtung) von etwa 8 mm. Auf diese Weise kann der Presskörper 20 mit Kontakt zu den Platten 14 angeordnet sein, was den Wärmeübergang zwischen den einzelnen Presskörpern 20 und den Platten 14 verbessert. Zu diesem Zweck weisen die Presskörper 20 und die Platten 14 vorzugsweise eine zueinander komplementäre Oberflächenstruktur bzw. -form auf, insbesondere eine glatte Oberfläche.

Wie Fig. 3 genauer zeigt, sind in den Presskörpern 20 jeweils Gaskanäle 22 zur Leitung des Reaktionsgases innerhalb des Presskörpers 20 vorhanden. Der jeweilige Gaskanal 22 ist vorzugsweise durch einen oder mehrere, vorzugsweise strömungsmechanisch zusammenhängende, beispielsweise parallel zueinander geschaltete, Kanäle 20 gebildet, der/die zumindest mit einem der primären Zu-/Ablaufkanäle 32 zur Zuleitung bzw. Ableitung von Reaktionsgas in Strömungsverbindung steht/stehen. Der Gaskanal 22 bzw. die Gaskanäle 22 können bereits während des Kompaktierens bzw. Pressens eingebracht werden oder z. B. in Form von Bohrungen im Nachgang. Der Gaskanal 22 bzw. die Gaskanäle 22 sind in dem jeweiligen Presskörper 20 vorzugsweise derart angeordnet, dass der Abstand aller infinitesimalen Presskörpervolumina eines jeweiligen Presskörpers 20 maximal einen gewissen Abstand von z. B. 40 mm, vorzugsweise 20 mm oder 10 mm, zu dem Gaskanal 22 bzw. den Gaskanälen 22 aufweist ("maximaler Abstand"), um den Stofftransport im Betrieb zu verbessern und eine Stofftransportlimitierung zu vermeiden.

Der Verbesserung des Stofftransports dient weiterhin, dass, wie vorliegend beispielhaft gezeigt, zumindest zwei primäre Zu-/Ablaufkanäle 32 mit einem jeweiligen primären Spaltkanal 12a in Strömungskontakt stehen. Der Abstand zwischen den primären Zu-/Ablaufkanälen 32 beträgt maximal 200 mm, vorzugsweise maximal 150 oder 100 mm. Dabei können die primären Zu-/Ablaufkanäle 32, ebenso wie die sekundären Zu-/Ablaufkanäle 34, insbesondere zylindrisch ausgebildet sein und sich in y-Richtung, orthogonal zu der Ausrichtung der Platten 14, erstrecken. Dabei verlaufen die Zu-/Ablaufkanäle 32, 34 z. B. in Form von Bohrungen durch die Platten 14 und die Presskörper 20 hindurch (vgl. Fig. 2). Denkbar ist auch, dass z. B. die primären Zu-/Ablaufkanäle 32 jeweils stirnseitig innerhalb des Plattenwärmeübertragers 10 angeordnet sind (vgl. Fig. 1).

Wie Fig. 1 zeigt, können in den primären Zu-/Ablaufkanälen 32 jeweils Filterkerzen 18 angeordnet sein. Die Filterkerzen 18 sind insbesondere derart dimensioniert, dass sie formschlüssig in den primären Zu-/Ablaufkanälen 30 sitzen. Die Filterkerzen 18 sind vorzugsweise aus einem Sintermetall gefertigt und/oder in Hohlform, z. B. hohlzylindrisch, ausgebildet. Auf diese Weise können Verunreinigungen innerhalb des Reaktionsgases aus dem Speichermaterial 16, die dieses verstopfen und die Funktion beeinträchtigen könnten, ferngehalten werden.

Die Herstellung des Reaktors 1 kann auf einfache Weise erfolgen, indem mehrere Einheiten zunächst vormontiert werden. Die Einheiten umfassen vorzugsweise jeweils einen der Presskörper 20 und zumindest eine, vorzugsweise zwei der Platten 14 jeweils auf einer Ober- und einer Unterseite des Presskörpers 20. Anschließend werden die Einheiten fluiddicht, auch bei gegebenenfalls hohen Betriebsdrücken von beispielsweise um 30 bar, aneinandergefügt, insbesondere mittels eines Löt- und/oder Schweißprozesses. Auf diese Weise wird der Befüllprozess des Plattenwärmeübertragers 10 mit dem Speichermaterial 16 mit der Reaktorfertigung verknüpft. Alternativ ist möglich, dass die Platten 14 unter Bildung der Spaltkanäle 12 aneinandergefügt werden, wobei die Spaltkanäle 12 zunächst an einer Seite, beispielsweise an einer Stirnseite (z. B. in einer y-z-Ebene) offen bleiben. Anschließend kann an der offenen Seite das Speichermaterial 16 in Form von Presskörpern 20 einfach eingebracht werden. Anschließend kann die offene Seite mit einer Wandung fluiddicht verschlossen werden, wobei insbesondere die Wandung fluiddicht mit dem Plattenwärmeübertragers 10 bzw. Reaktor 20 verschraubt wird.

Nach Montage wird der mit Speichermaterial 16 befüllte Reaktor 1 mittels eines Aktivierungsschrittes in Betriebsbereitschaft versetzt. Dabei wird zumindest ein Absorptions-/Desorptionszyklus durchgeführt. Auf diese Weise wird eine Oxidschicht, die sich durch die Sauerstoffatmosphäre auf dem Presskörper 20 bildet, von dem Presskörper 20 entfernt. Auf ein Vorzyklieren mit mehereren Zyklen zur Herstellung der Betriebsbereitschaft, wie aus dem Stand der Technik bekannt, kann vorteilhaft verzichtet werden.

Mittels der angegebenen Maßnahmen, unter anderem der asymmetrischen Ausbildung mit unterschiedlichen Spalthöhen h, s der Spaltkanäle 12, kann ein gegenüber dem Stand der Technik insbesondere hinsichtlich der Leistungsdichte weiter optimierter Reaktor 1 zur Verwendung mit einem thermochemischen Reaktionssystem bereitgestellt werden.

## Patentansprüche

1. Reaktor (1) zur Aufnahme eines Speichermaterials (16), welches unter Absorption bzw. Desorption eines Reaktionsgases Wärme abgibt bzw. aufnimmt, umfassend einen Plattenwärmeübertrager (10) mit einer Höhe (H), der eine Anzahl von, insbesondere zueinander im Wesentlichen parallelen, Platten (14) mit einer Länge (L) und einer Breite (B) aufweist, zwischen denen Spaltkanäle (12) mit Spalthöhen (s, h) ausgebildet sind, wobei die Spaltkanäle (12) unterteilt sind in
eine Gruppe primärer Spaltkanäle (12a), die strömungsmechanisch parallel geschaltet sind und zusammen einen primären Strömungskanal bilden, der mit zumindest einem primären Zu-/Ablaufkanal (32) einer Zu-/Ablaufanordnung (30) zur Leitung von Reaktionsgas in Strömungsverbindung steht,
und eine Gruppe sekundärer Spaltkanäle (12b), die strömungsmechanisch parallel geschaltet sind und zusammen einen sekundären Strömungskanal bilden, der mit zumindest einem sekundären Zu-/Ablaufkanal (34) einer sekundären Zu-/Ablaufanordnung (31) zur Leitung von Wärmetauscherfluid in Strömungsverbindung steht,
wobei die primären Spaltkanäle (12a) und die sekundären Spaltkanäle (12b) zueinander abwechselnd angeordnet sind,
**dadurch gekennzeichnet,**
**dass** zumindest einer der primären Spaltkanäle (12a) eine größere Spalthöhe (s) aufweist als zumindest einer der sekundären Spaltkanäle (12b), und
**dass** das Speichermaterial (16) innerhalb eines jeweiligen primären Spaltkanals (12a) in Form zumindest eines Presskörpers (20) vorliegt.

2. Reaktor (1) nach Anspruch 1,
**dadurch gekennzeichnet,**
**dass** das Verhältnis der Spalthöhen (h) der sekundären Spaltkanäle (12b) zu den Spalthöhen (s) der primären Spaltkanäle (12a) zwischen 1:2 und 1:10, vorzugsweise zwischen 1:3 und 1:8, besonders bevorzugt zwischen 1:4 und 1:6, beträgt.

3. Reaktor (1) nach Anspruch 1 oder 2,
**dadurch gekennzeichnet,**
**dass** die Außenmaße des Presskörpers (20) im Wesentlichen den Raummaßen des primären Spaltkanals (12a) entsprechen.

4. Reaktor (1) nach einem der vorhergehenden Ansprüche,
**dadurch gekennzeichnet,**
**dass** innerhalb des Presskörpers (20) zumindest ein Gaskanal (22) zur Leitung des Reaktionsgases durch den Presskörper (20) vorhanden ist, der zumindest mit einem der primären Zu-/ Ablaufkanäle (32) in Strömungsverbindung steht.

5. Reaktor (1) nach Anspruch 4,
**dadurch gekennzeichnet,**
**dass** der Gaskanal (22) bzw. die Gaskanäle (22) in dem Presskörper (20) derart angeordnet ist/sind, dass der Abstand aller infinitesimalen Presskörpervolumina des jeweiligen Presskörpers (20) maximal 40 mm, vorzugsweise maximal 20 mm oder 10 mm, von dem Gaskanal (22) bzw. den Gaskanälen beträgt.

6. Reaktor (1) nach einem der vorhergehenden Ansprüche,
**dadurch gekennzeichnet,**
**dass** bei einer Länge (L) des primären Spaltkanals (12a) von mehr als 100 mm, vorzugsweise mehr als 75 mm, zumindest zwei primäre Zu-/Ablaufkanäle (32) vorhanden sind, wobei der Abstand zwischen zwei primären Zu-/Ablaufkanälen (32) für Reaktionsgas maximal 200 mm, vorzugsweise maximal 150 mm, z. B. maximal 100 mm oder maximal 75 mm beträgt.

7. Reaktor (1) nach einem der vorhergehenden Ansprüche,
**dadurch gekennzeichnet,**
**dass** in zumindest einem der primären Zu-/ Ablaufkänale (32) eine Filterkerze (18) angeordnet ist, die insbesondere derart dimensioniert ist, dass sie formschlüssig in dem primären Zu-/ Ablaufkanal (32) sitzt und die bevorzugt aus einem Sintermetall gefertigt ist.

8. Reaktor (1) nach einem der vorhergehenden Ansprüche,
**dadurch gekennzeichnet,**
**dass** die primären und die sekundären Zu-/ Ablaufkänale (32, 34) zylindrisch ausgebildet sind und in Höhenrichtung, orthogonal zu den Platten (14) durch die Platten (14) und die Spaltkanäle (12) verlaufen.

9. Verfahren zur Herstellung eines Reaktors (1) nach einem der vorhergehenden Ansprüche, bei dem zwischen Platten (14) angeordnete primäre Spaltkanäle (12a) mit einem Speichermaterial (16) befüllt werden.

10. Verfahren nach Anspruch 9,
**dadurch gekennzeichnet,**
**dass** mehrere Einheiten, umfassend jeweils einen Presskörper (20) und zumindest eine Platte (14), vormontiert werden, und
**dass** die Einheiten anschließend mittels eines Löt- und/oder Schweißprozesses zu dem Reaktor (1) fluiddicht gefügt werden.

11. Verfahren nach Anspruch 9 oder 10,
**dadurch gekennzeichnet,**
**dass** die Platten (14) unter Bildung von Spaltkanälen (12) aneinandergefügt werden, wobei die Spaltkanäle (12) zunächst an einer Seite offen bleiben, dass anschließend an der offenen Seite das Speichermaterial (16) in Form von Presskörpern (20) eingebracht wird und
**dass** anschließend die offene Seite mit einer Wandung fluiddicht verschlossen, insbesondere verschraubt, wird.

12. Verfahren nach einem der Ansprüche 9 bis 11,
**dadurch gekennzeichnet,**
**dass** nach Montage des Reaktors (1) unter Befüllung mit dem Speichermaterial (16) ein Aktivierungsschritt durchgeführt wird, bei dem zumindest ein Absorptions-/ Desorptionszyklus durchlaufen wird.

## Claims

1. Reactor (1) for accommodating a storage material (16) which emits or absorbs heat under absorption or desorption of a reaction gas, comprising a plate heat exchanger (10) having a height (H), which exchanger has a number of plates (14) which are in particular substantially parallel to one another and have a length (L) and a width (B), between which plates gap ducts (12) having gap heights (s, h) are formed, the gap ducts (12) being divided into
a group of primary gap ducts (12a) which are connected in parallel in a fluidmechanical manner and together form a primary flow duct which is in flow connection with at least one primary inlet/outlet duct (32) of an inlet/outlet arrangement (30) for conducting reaction gas,
and a group of secondary gap ducts (12b) which are connected in parallel in a fluidmechanical manner and together form a secondary flow duct which is in flow connection with at least one secondary inlet/outlet duct (34) of a secondary inlet/outlet arrangement (31) for conducting heat exchanger fluid,
the primary gap ducts (12a) and the secondary gap ducts (12b) being arranged alternately to one another,
**characterized in that**
at least one of the primary gap ducts (12a) has a greater gap height (s) than at least one of the secondary gap ducts (12b), and
**in that** the storage material (16) is present within a particular primary gap duct (12a) in the form of at least one compact (20).

2. Reactor (1) according to claim 1,
**characterized in that**
the ratio of the gap heights (h) of the secondary gap ducts (12b) to the gap heights (s) of the primary gap ducts (12a) is between 1:2 and 1:10, preferably between 1:3 and 1:8, particularly preferably between 1:4 and 1:6.

3. Reactor (1) according to either claim 1 or claim 2,
**characterized in that**
the external dimensions of the compact (20) substantially correspond to the spatial dimensions of the primary gap duct (12a).

4. Reactor (1) according to any of the preceding claims,
**characterized in that**
within the compact (20) there is at least one gas duct (22) for conducting the reaction gas through the compact (20) which is in flow connection with at least one of the primary inlet/outlet ducts (32).

5. Reactor (1) according to claim 4,
**characterized in that**
the gas duct (22) or the gas ducts (22) is/are arranged in the compact (20) in such a way that the distance between all infinitesimal compact volumes of the particular compact (20) is a maximum of 40 mm, preferably a maximum of 20 mm or 10 mm, from the gas duct (22) or the gas ducts.

6. Reactor (1) according to any of the preceding claims,
**characterized in that**
with a length (L) of the primary gap duct (12a) of more than 100 mm, preferably more than 75 mm, there are at least two primary inlet/outlet ducts (32), the distance between two primary inlet/outlet ducts (32) for reaction gas being a maximum of 200 mm, preferably a maximum of 150 mm, e. g. a maximum of 100 mm or a maximum of 75 mm.

7. Reactor (1) according to any of the preceding claims,
**characterized in that**
a filter candle (18) is arranged in at least one of the primary inlet/outlet ducts (32), which candle is in particular dimensioned in such a way that it rests in the primary inlet/outlet duct (32) in a positive manner and which is preferably made of a sintered metal.

8. Reactor (1) according to any of the preceding claims,
**characterized in that**
the primary and the secondary inlet/outlet ducts (32, 34) are cylindrical and extend in the vertical direction orthogonally to the plates (14) through the plates (14) and the gap ducts (12).

9. Method for producing a reactor (1) according to any of the preceding claims, in which primary gap ducts (12a) arranged between plates (14) are filled with a storage material (16).

10. Method according to claim 9,
**characterized in that**
a plurality of units, each comprising a compact (20) and at least one plate (14), are preassembled, and
**in that** the units are then joined to the reactor (1) in a fluid-tight manner by means of a soldering and/or welding process.

11. Method according to either claim 9 or claim 10,
**characterized in that**
the plates (14) are joined together to form gap ducts (12), the gap ducts (12) initially remaining open on one side,
**in that** the storage material (16) is then introduced on the open side in the form of compacts (20) and
**in that** the open side is then closed, in particular screwed, with a wall in a fluid-tight manner.

12. Method according to any of claims 9 to 11,
**characterized in that**
after the reactor (1) is assembled while being filled with the storage material (16), an activation step is carried out in which at least one absorption/desorption cycle is carried out.

## Revendications

1. Réacteur (1) destiné à la réception d'un matériau de stockage (16), lequel par absorption ou désorption d'un gaz de réaction émet ou absorbe de la chaleur, comprenant un échangeur de chaleur à plaques (10) présentant une hauteur (H), laquelle comporte un nombre de plaques (14), en particulier sensiblement parallèles les unes aux autres, présentant une longueur (L) et une largeur (B), entre lesquelles sont formés des canaux d'espacement (12) présentant des hauteurs d'espacement (s, h), dans lequel les canaux d'espacement (12) sont divisés en
un groupe de canaux d'espacement (12a) primaires, lesquels sont reliés fluidiquement en parallèle et forment ensemble un canal d'écoulement primaire, lequel est en liaison fluidique avec au moins un canal d'entrée/sortie (32) primaire d'un agencement d'entrée/sortie (30) pour conduire un gaz de réaction,
et un groupe de canaux d'espacement (12b) secondaires, lesquels sont reliés fluidiquement en parallèle et forment ensemble un canal d'écoulement secondaire, lequel est en liaison fluidique avec au moins un canal d'entrée/sortie (34) secondaire d'un agencement d'entrée/sortie (31) secondaire pour conduire un fluide d'échangeur de chaleur,
les canaux d'espacement (12a) primaires et les canaux d'espacement (12b) secondaires étant disposés alternativement les uns par rapport aux autres, **caractérisé en ce**
**que** l'au moins un des canaux d'espacement (12a) primaires présente une hauteur d'espacement (s) supérieure à l'au moins un des canaux d'espacement (12b) secondaires, et
**que** le matériau de stockage (16) est présent à l'intérieur d'un canal d'espacement (12a) primaire respectif sous la forme d'au moins un corps pressé (20).

2. Réacteur (1) selon la revendication 1,
**caractérisé en ce**
**que** le rapport des hauteurs d'espacement (h) des canaux d'espacement (12b) secondaires aux hauteurs d'espacement (s) des canaux d'espacement (12a) primaires est compris entre 1:2 et 1:10, de préférence entre 1:3 et 1:8, de préférence encore entre 1:4 et 1:6.

3. Réacteur (1) selon la revendication 1 ou 2,
**caractérisé en ce**
**que** les dimensions extérieures du corps pressé (20) correspondent sensiblement aux dimensions spatiales du canal d'espacement (12a) primaire.

4. Réacteur (1) selon l'une quelconque des revendications précédentes, **caractérisé en ce**
**qu'**à l'intérieur du corps pressé (20) se trouve au moins un canal de gaz (22) destiné à la conduite du gaz de réaction à travers le corps pressé (20), ledit canal de gaz étant en liaison fluidique avec l'au moins un des canaux d'entrée/sortie (32) primaires.

5. Réacteur (1) selon la revendication 4,
**caractérisé en ce**
**que** le canal de gaz (22) ou les canaux de gaz (22) sont disposés dans le corps pressé (20) de telle sorte que la distance entre tous les volumes de corps pressé infinitésimaux du corps pressé (20) respectif est au maximum de 40 mm, de préférence au maximum de 20 mm ou de 10 mm, par rapport au canal de gaz (22) ou aux canaux de gaz.

6. Réacteur (1) selon l'une quelconque des revendications précédentes, **caractérisé en ce**
**que** les au moins deux canaux d'entrée/sortie (32) primaires présentent une longueur (L) du canal d'espacement (12a) primaire de plus de 100 mm, de préférence de plus de 75 mm, la distance entre deux canaux d'entrée/sortie (32) primaires pour un gaz de réaction étant au maximum de 200 mm, de préférence au maximum de 150 mm, par exemple au maximum de 100 mm ou au maximum de 75 mm.

7. Réacteur (1) selon l'une quelconque des revendications précédentes, **caractérisé en ce**
**qu'**une bougie filtrante (18) est disposée dans l'au moins un des canaux d'entrée/sortie (32) primaires, laquelle est en particulier dimensionnée de telle sorte qu'elle repose dans le canal d'entrée/sortie (32) primaire par complémentarité de forme et est de préférence en un métal fritté.

8. Réacteur (1) selon l'une quelconque des revendications précédentes, **caractérisé en ce**
**que** les canaux d'entrée/sortie (32, 34) primaires et secondaires sont cylindriques et s'étendent à travers les plaques (14) et les canaux d'espacement (12) dans la direction verticale, orthogonalement aux plaques (14).

9. Procédé de fabrication d'un réacteur (1) selon l'une quelconque des revendications précédentes, selon lequel des canaux d'espacement (12a) primaires disposés entre des plaques (14) sont remplis d'un matériau de stockage (16).

10. Procédé selon la revendication 9,
**caractérisé en ce**
**que** plusieurs unités comprenant respectivement un corps pressé (20) et au moins une plaque (14) sont préassemblées, et
**que** les unités sont ensuite jointes au réacteur (1) de manière étanche aux fluides au moyen d'un processus de brasage et/ou de soudage.

11. Procédé selon la revendication 9 ou 10,
**caractérisé en ce**
**que** les plaques (14) sont jointes les unes aux autres en formant des canaux d'espacement (12), dans lequel les canaux d'espacement (12) restent initialement ouverts d'un côté,
**qu'**ensuite, le matériau de stockage (16) est introduit sous la forme de corps pressés (20) par le côté ouvert et
**qu'**ensuite, le côté ouvert est fermé de manière étanche aux fluides par une paroi, en particulier vissée.

12. Procédé selon l'une quelconque des revendications 9 à 11,
**caractérisé en ce**
**qu'**après l'assemblage du réacteur (1) en le remplissant du matériau de stockage (16), une étape d'activation est mise en œuvre, dans laquelle au moins un cycle d'absorption/désorption est mis en œuvre.
